# EUROPEAN PATENT APPLICATION

(11) **EP 2 876 560 A1**
(43) Date of publication of application: **27.05.2015**
(21) Application number: 13196551.9
(22) Date of filing: 10.12.2013
(51) Int. Cl.: G06F 17/30

(54) **METHOD FOR PROVIDING A USER WITH DOCUMENT SEARCH RESULTS IN THE FORM OF A WEBSITE**

(30) Priority: 22.11.2013 PL 40619613
(71) Applicant: eo Networks S.A., 02-215 Warszawa (PL)
(72) Inventor: Ziolkowska, Katarzyna, 02-678 Warszawa (PL)
(74) Representative: Sielewiesiuk, Jakub

(57) **Abstract**

The object of the invention is a method for providing a user (7) with document search results in the form of a website (8) which contains a list of documents ordered according to a ranking, comprising the steps of: a) receiving, by the first application (2) on a server (1), a query from the user (7); b) finding, in the database, document identifiers corresponding to a query received from the user (7); c) reading out from the file (4) a ranking value corresponding to each of the documents found; d) generating the website (8) containing a list of documents found, ordered according to the ranking read out from the file (4); e) sending this generated website (8) to the user's (7) terminal - characterises in that previously, that is, before step c), and preferably before step a), step f) of calculating, by the second application (6), a ranking value corresponding to each of the found documents based on the log (5) of user (7) behaviour and registering this ranking value in the said file (4) is performed.

## Description

The object of the invention is a method for providing a user with document search results in the form of a website. More specifically, the invention relates to a computer-implemented method for controlling an information search engine in an information searcher, the method allowing to affect search results based on document rankings.

Controlling a search engine is a functionality which allows to affect search results by means of various types of document rankings. In the prior art, methods for affecting search results, which are based on various parameters for positioning query results, are known. Determining validity of a given document based on values contained in a given field of the document is currently the most commonly used solution. A searcher for film service can be indicated as an example. Each document in the searcher can be an article, a film description, a blog entry. While searching, the results will be displayed based on type of document being searched, e.g. films will be located on top of the list of results. Parameters defining what documents are more important are defined manually. Determining validity of documents based on the accuracy of a phrase entered is another method for positioning search results. In this case, a query entered is taken into account and the presence of words from the query in a document is checked. The more words from the query a given document contains, the higher the document is located in the search results.

Therefore, search results have the form of a list of documents, typically presented to the user in the form of a website, each of the documents found being associated with a certain ranking, and the position of a given document in the list of results being based on this ranking.

Methods for generating a ranking of documents in search results are the subject of numerous patent applications. For example, a method for appending new documents which have recently appeared on the Internet to the list of search results with a randomly assigned ranking value is known from U.S. application no. US 2012/0130814 A1. Then, behaviours of users are monitored and, according to them, the ranking value is changed. In particular, rankings based on popularity of particular documents among users, i.e. based on how often a given document is chosen (opened, clicked on) by the user in response to a query asked or how often a given document is chosen by users in general (regardless of the query content) are known. An example of such ranking is described in U.S. application no. US 2012/0330945 A1.

The presented solutions share the same disadvantage - they do not allow to automatically control the search results. External parameters for positioning results are not always adequate to the expectations of users. These methods are characterised by:
a) inability to dynamically control parameters for positioning results;
b) considerable use of computational resources of equipment, which affects the efficiency and speed of information search;
c) not taking into account the currently dominating trends. Internet is an environment where trends change rapidly, certain subjects quickly become popular and just as quickly fall into oblivion.

Therefore, a need to effectively impact the control of the search engine by introducing an optimal method for controlling the searcher arises.

Controlling the position of search results, observed in SOLR engine and using functionality of ExternalFileField and Field Based Boosting, presented in http://everydaydeveloper.blogspot.com/2012/02/adding-ranking-support-using-solr.html, is the closest to the proposed solution in terms of overall characteristics. In this method, the ability to define validity values of a document (score) in an external file and to use them while querying is the essence. A disadvantage of this method is that the validity values have to be entered manually into an appropriate file, which introduces additional overhead time and the need to manually update and control the score values of documents.

The problem presented is solved in such a way that a mechanism which collects information on behaviour of the searcher users, i.e. queries entered, documents chosen, date/time of the search, is created. The collected information is processed and document rankings are created on their basis. The entire process is automated and does not require supervision. Thus, the user's time is saved and the search results are better suited to the currently dominating trends - document ranking changes dynamically along with the trend changes.

The method for providing a user with document search results in the form of a website which contains a list of documents ordered according to the ranking, comprising the steps of: a) receiving, by the first application on a server, a query from the user; b) finding, in the database, document identifiers corresponding to a query received from the user; c) reading out from the file a ranking value corresponding to each of the documents found; d) generating the website containing a list of documents found, ordered according to the ranking read out from the file; e) sending this generated website to the user's terminal; according to the invention is characterised in that previously, that is, before step c), and preferably before step a), step f) of calculating, by the second application, a ranking value corresponding to each of the found documents based on the log of user behaviour and registering this ranking value in the said file is performed.

Preferably, the said second application, based on the log of user behaviour, calculates statistics of documents most often chosen by users and assigns to each of the documents a ranking value, the more often the document is chosen by users, the higher the ranking value is according to the calculated statistics.

Preferably, the said statistics is created globally for all documents, regardless of the content of the user's query.

Preferably, the said statistics is created individually for each query of the user, taking into account its content.

Preferably, the log of user behaviour, mentioned in step f), comprises the following data: identifier of the user, search collection/index to which the user query was addressed, content of the user's query, document identifier which was chosen by the user, position of this document in the search results, date of search.

Preferably, the said list of documents comprises at least an indication of document, possibly a hyperlink (a web link) to the document, possibly a graphic file or a video file associated with the document.

Preferably, the database, mentioned in step b), is located on the same server as the said first application or is located on a server different than the one with the said first application.

Preferably, the file, mentioned in step c) and f), is located on the same server as the said first application or is located on a server different than the one with the said first application.

Preferably, the second application, mentioned in step f), is located on the same server as the said first application or is located on a server different than the one with the said first application.

Preferably, the log of user behaviour, mentioned in step f), is located on the same server as the said first application or is located on a server different than the one with the said first application.

Preferably, the website, mentioned in step e), is displayed on the user's terminal.

### Preferred Embodiment of the Invention

Now, the invention will be presented in greater detail in a preferred embodiment, with reference to the accompanying drawings in which:

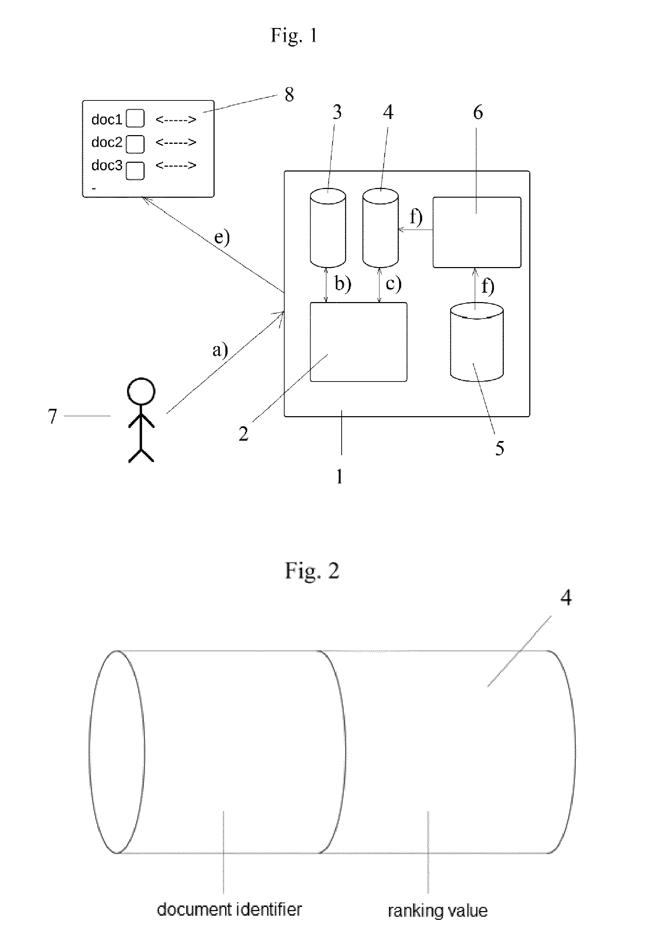

- Fig. 1: schematically illustrates the method according to the present invention, implemented in an exemplary network environment,
- Fig. 2: schematically shows the file structure with ranking values for individual documents, and

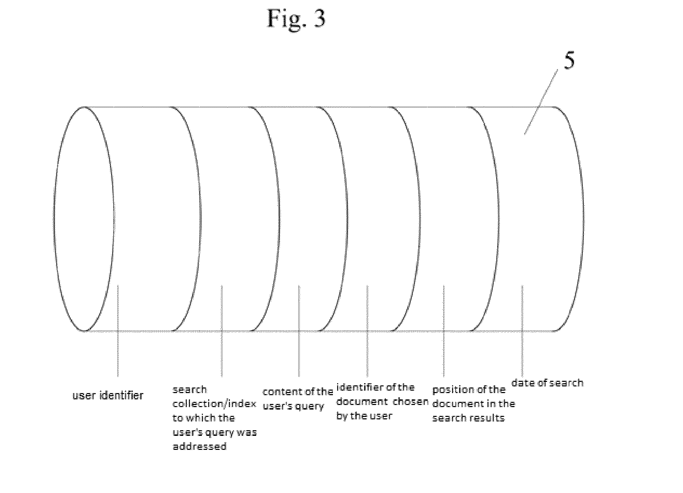

- Fig. 3: schematically shows the structure of the log of user behaviour.
In the drawings the following designations were used: 1 - server, 2 - first application, 3 - document database, 4 - file with ranking values, 5 - log of user behaviour, 6 - second application, 7 - user, 8 - website with search results.

In the embodiment, the method may be used in an online document searcher, where the control of the search engine is performed by means of two cooperating modules: a module responsible for collecting information about user behaviour (logs) 5 and a module responsible for generating document rankings. Data on user behaviour 5 of the searcher, collected by the module for collecting information are preferably registered in a database 3. The collected information on user behaviour 5 comprises the following contents: identifier of the user 7, search collection/index to which the query was addressed, content of the query, document identifier which was chosen by the user 7, position of the document in the search results and date of search.

The information are transmitted via a controller to the MongoDB base. Based on data from the base 3, rankings are generated. Ranking generation consists of two phases 2, 6. The first phase 2 consists in generating relevant statistics of the collected logs 5 on the behaviour of users 7. The second phase 6 generates a ranking based on the created statistics. To generate statistics, Map/Reduce programming model can be used, available in the MongoDB database. Statistics, similarly to logs 5, are stored in the MongoDB database, which results from the mode of operation of Map/Reduce. The operation should result in a document ranking, most often registered in the file 4. In the embodiment, two rankings of documents are created. Both are based on information on the user behaviour 5. The first of the rankings is a ranking of document validity, consisting in creating statistics on documents most often chosen by users 7 and, on their basis, creating a list of documents which should be located higher than the others in the search results.

This ranking is built based on the functionality which allows to retrieve values from the external file 4 rather than from the index. In the external file 4, document identifiers together with values which determine "validity" of document are registered. On the basis of the "validity" of document, position of documents in the search results is raised. Documents with a high value "validity" will be positioned higher in the search results.

The second of the rankings, in the embodiment, is a ranking of documents for query phrases. Unlike in the ranking of document validity, where a ranking of documents most often chosen for the whole collection is created, the ranking of documents for queries creates a ranking in which it determines queries most often chosen for the query. Thus, it allows to match the best documents for the queries entered. The ranking is created based on the collected information on the user behaviour 5, that is, in this case it is based on documents chosen by the user 7 as those matching the most his query.

Such rankings can be, for example, implemented in the searcher based on the SOLR platform.

The use of the ranking of documents in the searcher consists in adding to the structure definition an index field, the values of which will be retrieved from the external file 4 generated by the ranking module. Values from this field can, then, be used to raise validities of documents.

## Claims

1. A method for providing a user with document search results in the form of a website which contains a list of documents ordered according to a ranking, comprising the steps of:
a. receiving, by the first application on a server, a query from the user,
b. finding, in the database, document identifiers corresponding to the query received from the user,
c. reading out from the file a ranking value corresponding to each of the documents found,
d. generating the website containing a list of documents found, ordered according to the ranking read out from the file,
e. Sending this generated website to the user's terminal,
**characterised in that** previously, that is, before step c), and preferably before step a), a step of
f. calculating, by the second application (6), a ranking value corresponding to each of the found documents based on the log (5) of user (7) behaviour and registering this ranking value in the said file (4) is performed.

2. The method according to claim 1, **characterised in that** the said second application (6), based on the log (5) of user (7) behaviour, calculates statistics of documents most often chosen by users (7) and assigns to each of the documents a ranking value, wherein the more often the document is chosen by users (7), the higher the ranking value is according to the calculated statistics.

3. The method according to claim 2, **characterised in that** the said statistics is created globally for all documents, regardless of the query content from the user (7).

4. The method according to claim 2, **characterised in that** the said statistics is created individually for each query of the user (7), taking into account its content.

5. The method according to any one of the preceding claims 1 to 4, **characterised in that** the log (5) of user (7) behaviour, mentioned in step f), comprises the following data: identifier of the user (7), search collection/index to which the user's (7) query was addressed, content of the user's (7) query, document identifier which was chosen by the user (7), position of this document in the search results, date of search.

6. The method according to any one of the preceding claims 1 to 5, **characterised in that** the said list of documents comprises at least an indication of document, possibly a hyperlink (a web link) to the document, possibly a graphic file or a video file associated with the document.

7. The method according to any one of the preceding claims 1 to 6, **characterised in that** the database (3), mentioned in step b), is located on the same server (1) as the said first application (2) or is located on a server (1) different than the one with the said first application (2).

8. The method according to any one of the preceding claims 1 to 7, **characterised in that** the file (4), mentioned in steps c) and f), is located on the same server (1) as the said first application (2) or is located on a server (1) different than the one with the said first application (2).

9. The method according to any one of the preceding claims 1 to 8, **characterised in that** the second application (6), mentioned in step f), is located on the same server (1) as the said first application (2) or is located on a server (1) different than the one with the said first application (2).

10. The method according to any one of the preceding claims 1 to 9, **characterised in that** the log (5) of user (7) behaviour, mentioned in step f), is located on the same server (1) as the said first application (2) or is located on a server (1) different than the one with the said first application (2).

11. **The** method according to any one of the preceding claims 1 to 10, **characterised in that** the website (8), mentioned in step e), is displayed on the user's (7) terminal.
